(19) **Europäisches Patentamt**

**European Patent Office**

**Office européen des brevets**

(11) **EP 0 506 035 B1**

(12) ## EUROPEAN PATENT SPECIFICATION

(45) Date of publication and mention
of the grant of the patent:
**11.09.1996  Bulletin 1996/37**

(51) Int Cl.6: **H02H 1/04**

(21) Application number: **92105169.4**

(22) Date of filing: **26.03.1992**

(54) **Method and device for detecting saturation in current transformers**

Verfahren und Anordnung zur Erkennung einer Sättigung von Stromwandlertransformatoren

Procédé et dispositif pour détecter saturation dans les transformateurs de courant

(84) Designated Contracting States:
**CH DE FR GB IT LI**

(72) Inventor: **Murari, Mohan Saha**
**S-72244 Västeras (SE)**

(30) Priority: **27.03.1991  SE 9100917**

(74) Representative: **Boecker, Joachim, Dr.-Ing.**
**Adelonstrasse 58**
**65929 Frankfurt am Main (DE)**

(43) Date of publication of application:
**30.09.1992  Bulletin 1992/40**

(56) References cited:
**EP-A- 0 040 142**        **EP-A- 0 326 237**
**US-A- 3 678 377**

(73) Proprietor: **ASEA BROWN BOVERI AB**
**721 83 Västeras (SE)**

EP 0 506 035 B1

## Description

The invention relates to a method and a device for detecting saturation in current transformers according to the precharacterising part of claim 1 and claim 2, respectively.

Instrument transformers for current and voltage constitute an important and integral part of control, supervision and protective devices in most power transmission systems. It is, of course, very important that these measuring means correctly reproduce the quantities they are intended to measure, both as regards static and dynamic values. Since both control and supervision devices and, in particular, protective devices are often based on instantaneous value measurement, very high demands are placed on good dynamic conformity during the measurements.

For practical and economical reasons, it is not possible to design current transformers such that saturation is avoided at all fault current levels. If, during a fault state, a considerably higher current than the rated current arises, the current transformer will become magnetically saturated. This means that the waveform of the delivered current becomes distorted. In certain applications, inter alia in current differential protective means, the distorted waveform may give rise to a malfunction of the protective device. It is, therefore, of great importance to be able to detect very rapidly whether a current transformer is subjected to such a current that it operates in a magnetically saturated state.

When the magnetic flux in the core of a current transformer enters the saturation region, the output current of the transformer becomes distorted. The factors which influence the flux in the core are the amplitude, duration and waveform of the primary current as well as the composition of the burden of the current transformer. The core may become saturated at high symmetrical fault currents, but also in case of long-term aperiodic components in the fault currents. It has proved that the latter play an important role for the transient properties of the current transformers.

Since current transformers have a laminated core of sheets of ferromagnetic material, there may be a residual magnetic remanence in the core. The residual flux which thereby arises may either improve or worsen the influence on the measured current if this contains a transient aperiodic component.

There are currently several different methods for detecting saturation in current transformers. SE-B-366,435, "Device for detecting the times for saturation of a transformer", describes a method which is based on a comparison of the derivatives of current at the two points where the current passes zero and where the derivatives are negative and positive, respectively. The transformer is considered saturated if the absolute value of the negative derivative is smaller than the absolute value of the positive derivative. This is always the case when the current comprises a positive aperiodic component. A disadvantage of the method described in SE-B-366,435 is that the detection requires the time for two zero-crossings of the current. The method is not fully reliable since the above criterion for saturation is fulfilled for a non-saturated current transformer which is placed at the other end of a cable which is fed from two directions.

In a publication from A. Reyrolle & Co. Ltd., 1958, entitled "Effects of Transients in Instrument Transformers", written by F.L. Hamilton, it is described how transients which may entail saturation of current transformers influence the measurement. With the aid of what is described therein, a method for detecting saturation by comparison between the current integrals for consecutive zero-current crossings for a saturated current transformer can be arrived at. With this method, however, the time for detection, after saturation has occurred, will amount to about 20 ms, that is, a time which is too long to be used for fast protection systems.

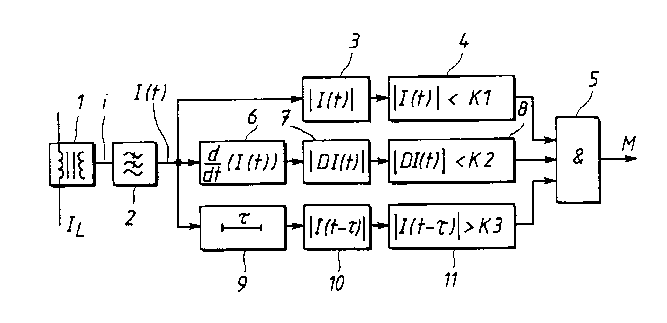

The GEC Measurements publication "Low Impedance Bus Bar Protection MBCZ10" describes a method with analogue technique for the detection of saturation in current transformers. A simplified embodiment of the detection circuit is shown in Figure 14 of this publication. An auxiliary transformer is connected to the secondary circuit of the current transformer, the secondary voltage of the auxiliary transformer being rectified and supplied to an RC circuit which also comprises a diode designed and dimensioned such that the rectified voltage and half of this voltage are supplied to a comparator. When the rectified voltage is lower than 0,5 V, the comparator delivers an output signal which turns on an electronic switching member which indicates that the current transformer is saturated. The disadvantage of this method is that detection of saturation can only take place after a second zero-crossing for the current after the occurrence of saturation.

The invention aims at developing a method and a detector for detecting saturation in current transformers which method and detector perform very rapidly and enjoy reliability and relative simplicity.

To achieve this aim the invention suggests a method for detecting saturation in current transformers according to the introductory part of claim 1, which is characterized by the features of the characterizing part of claim 1.

The invention further suggests a detector for detecting saturation in current transformers according to the introductory part of claim 2, which detector is characterized by the features of the characterizing part of claim 2.

The method and the detector for detecting saturation of current transformers according to the invention are based on continuous determination of the absolute value of both the current and the derivative of the current. To prevent current harmonics from influencing the measurement and to facilitate the determination of the derivatives of the currents, the current is first filtered with the aid of a low-pass filter.

It can be shown that the following criteria are sufficient and necessary to determine whether a current transformer has become saturated: If both the absolute value of the current and the absolute value of the derivative of the current are lower than very small predetermined values while at the same time the absolute value of the current a short time earlier was greater than a predetermined value, then the current transformer is saturated. These criteria may be expressed as follows:

$$|I(t)| < K1$$

$$|d(I(t))/dt| < K2$$

$$|I(t-\tau)| > K3$$

The constants K1, K2 and K3 have been estimated with the aid of the ratings in question. The constant K1 is suitably given as one or a few per cent of the rated value of the current. The constant K2 is given as one or a few per cent of the maximum value of the derivative of the current at sinusoidal waveform. The constant K3 may be set at a value near the rating of the current transformer. The value of $\tau$ may suitably be set at a few ms.

Tests have shown that detection of saturation with a method according to the invention may be obtained in the course of 3-5 ms, that is, that the method is considerably better than those described above as far as speed of action is concerned. The method also permits an exceedingly simple embodiment of a detector, since only a small number of components of conventional measuring and logic circuits are needed.

The invention will now be described in greater detail with reference to the accompanying drawing which shows a suitable embodiment of a detector for current transformer saturation according to the invention.

The line current $I_L$ is measured with the aid of a current transformer 1 which is to be monitored with respect to saturation. The secondary current "i" of the current transformer is low-pass filtered in the filter 2 such that the current I(t) after the filtering is free from harmonics. The current I(t) is passed to a first absolute value generator 3, the value of which is then passed to a first comparator 4 for comparison with a constant K1 determined according to the reasoning above. If the absolute value of I(t) is smaller than K1, the AND-element 5 receives an input signal from comparator 4.

The filtered current I(t) is further derived in a differentiating unit 6, whereupon the absolute value of DI(t) is formed in a second absolute value generator 7. This value is then passed to a second comparator 8 for comparison with a constant K2, also determined according to the above reasoning. If the absolute value of the derivative of the current is smaller than K2, the AND-element 5 receives an input signal from comparator 8.

With the aid of a memory unit 9, the value of I(t) the time $\tau$ earlier, that is, I(t-$\tau$), is retained. The absolute value of this current is formed in a third absolute value generator 10, the value of which is then compared in a comparator 11 with a constant K3, also determined according to the above reasoning. If the absolute value is greater than K3, the AND-element 5 receives an input signal from comparator 11.

If all the criteria according to the comparators are fulfilled by the answer "yes", the AND-element 5 will deliver a signal M indicating that the current transformer is saturated.

The embodiment shown in the figure, as far as the construction of the detector is concerned, may of course be varied in many ways within the scope of the invention as defined by the claims. Thus, for example, the filters, the differentiating unit, the absolute value generators, the comparators etc. may be integrated into one unit and the signal processing may take place in the form of analogue, digital, or hybrid technique.

## Claims

1. Method for detecting saturation in current transformers (1) based on continuous determination of the absolute value of both the current |I(t)| and the derivative |d(I(t))/dt| of the current, **characterized** in that the delivered current of the current transformer is first low-passed filtered, that thereafter are formed both the absolute value of the current and the absolute value of the derivative of the current, and that current transformer saturation is indicated when the following three conditions are simultaneously met:

$$|I(t)| < K1,$$

$$|d(I(t))/dt| < K2,$$

$$|I(t-\tau)| > K3,$$

where K1 is a predetermined value corresponding to a few per cent of the rated value of the current in question, K2 is a predetermined value of a few per cent of the maximum value of the derivative of the current at sinusoidal waveform, K3 is a predetermined value corresponding to the rated value of the current, and the time $\tau$ is set at a value lower than the time for 1/4 period of the power frequency in question.

2. Detector for for detecting saturation in current transformers (1), **characterized** in that the detector comprises

- a low-pass filter (2) for filtering off harmonics in the current I(t) from the secondary side of the current transformer,

- a first absolute value generator (3) for forming |I(t)|,

- a differentiating unit (6) for forming the derivative DI(t) of the current I(t), which differentiating unit (6) is connected to a second absolute value generator (7) for forming IDI(t)I,

- a memory circuit (9) for producing I(t-$\tau$) where $\tau$ has a value lower than the time for 1/4 period of the power frequency in question, said memory circuit (9) being connected to a third absolute value generator (10) for forming II(t - $\tau$)I,

that said first absolute value generator (3) is connected to a first comparator (4) which compares its input signal with a first predetermined value (K1), corresponding to a few per cent of the rated value of the current, and which comparator generates an output signal if the input signal is smaller than the first predetermined value,
that said second absolute value generator (7) is connected to a second comparator (8) which compares its input signal with a second predetermined value (K2), which corresponds to a few per cent of the maximum value of the derivative of the current, and which comparator generates an output signal if the input signal is smaller than the second predetermined value (K2),
that said third absolute value generator (10) is connected to a third comparator (11) which compares its input signal with a third predetermined value (K3), which corresponds to to the rated value of the current, and which comparator generates an output signal if the input signal is greater than the third predetermined value (K3),
and that the output signals of the three comparators (4,8,11) are connected to one input each of an AND-element (5), which is adapted to deliver an output signal (M) when all three of its inputs simultaneous receive a signal from their associated comparators, said output signal (M) indicating saturation of the current transformer.

**Patentansprüche**

1. Verfahren zur Feststellung der Sättigung in Stromtransformatoren (1), basierend auf der fortlaufenden Bestimmung der Absolutwerte sowohl des Stromes II(t)I als auch der Ableitung des Stromes Id(I(t))/dtI,**dadurch gekennzeichnet**, daß der vom Stromtransformator gelieferte Strom zunächst tiefpaß-gefiltert wird, daß danach sowohl der Absolutwert des Stromes als auch der Absolutwert der Ableitung des Stromes gebildet werden und daß die Sättigung des Stromtransformators angezeigt wird, wenn die folgenden drei Bedingungen gleichzeitig erfüllt sind:

$$II(t)I < K1,$$

$$Id(I(t))/dtI < K2,$$

$$II(t-\tau)I > K3,$$

wobei K1 ein vorbestimmter Wert ist, der einige Prozent des Nennwertes des betreffenden Stromes beträgt, K2 ein vorbestimmter Wert ist, der einige Prozent des Maximalwertes der Ableitung des Stromes bei sinusförmiger Kurvenform beträgt, K3 ein vorbestimmter Wert ist, der dem Nennwert des Stromes entspricht, und die Zeit $\tau$ auf einen Wert gesetzt ist, der kleiner als 1/4 der Periode der betreffenden Leistungsfrequenz ist.

2. Detektor zur Feststellung der Sättigung in Stromtransformatoren (1), **dadurch gekennzeichnet**, daß zu dem Detektor gehören

- ein Tiefpassfilter (2) zum Herausfiltern der Oberwellen aus dem Strom I(t) der Sekundärseite des Stromtransformators,

- ein erster Absolutwertgenerator (3) zur Bildung von II(t)I,

- eine Differenziereinheit (6) zur Bildung der Ableitung DI(t) des Stromes I(t), welche Differenziereinheit (6) an einen zweiten Absolutwertgenerator (7) zur Bildung von DI(t) angeschlossen ist,

- ein Speicherkreis (9) zur Bildung von I(t-$\tau$), wobei $\tau$ einen Wert hat, der kleiner ist als 1/4 der Periode der betreffenden Leistungsfrequenz, welcher Speicherkreis (9) an einen dritten Absolutwertgenerator (10) zur Bildung von II(t - $\tau$)I angeschlossen ist,

daß der genannte erste Absolutwertgenerator (3) an einen ersten Komparator (4) angeschlossen ist, welcher sein Eingangssignal mit einem ersten vorbestimmten Wert (K1) vergleicht, welcher einige Prozent des Nennwertes des Stromes entspricht, und welcher Komparator ein Ausgangssignal erzeugt, wenn das Eingangssignal kleiner als der erste vorbestimmten Wert ist,
daß der genannte zweite Absolutwertgenerator (7) an einen zweiten Komparator (8) angeschlossen ist, welcher sein Eingangssignal mit einem zweiten vorbestimmten Wert (K2) vergleicht, der einige Prozent des Maximalwertes der Ableitung des Stromes entspricht, und welcher Komparator ein Ausgangssignal erzeugt, wenn das Eingangssignal kleiner als der zweite vorbestimmte Wert (K2) ist,
daß der genannte dritte Absolutwertgenerator (10) an einen dritten Komparator (11) angeschlossen ist, der sein Eingangssignal mit einem dritten vorbestimmten Wert (K3) vergleicht, der dem Nennwert des Stromes entspricht, und welcher Komparator ein Ausgangssignal erzeugt, wenn das Eingangssignal größer als der dritte vorbestimmte Wert (K3) ist,

und daß das Ausgangssignal der drei Komparatoren (4,8,11) an je einen Eingang eines UND-Gliedes (5) angeschlossen sind, welches ein Ausgangssignal (M) zu liefert vermag, wenn alle seine drei Eingänge gleichzeitig ein Signal von ihren zugehörigen Komparatoren empfangen, wobei das genannte Ausgangssignal (M) Sättigung des Stromtransformators anzeigt.

**Revendications**

1. Procédé pour détecter une saturation dans des transformateurs de courant (1) fondé sur la détermination en continu des valeurs absolues du courant $|I(t)|$ et de la dérivée $|d(I(t))/dt|$ du courant, caractérisé en ce que le courant fourni par le transformateur de courant est tout d'abord soumis à un filtrage passe-bas, puis en ce qu'on forme ensuite à la fois la valeur absolue du courant et la valeur absolue de la dérivée du courant, et en ce que la saturation du transformateur de courant est indiquée lorsque les trois conditions suivantes sont satisfaites simultanément :

$$|I(t)| < K1$$

$$|d(I(t))/dt| < K2$$

$$|I(t-\tau)| > K3$$

où K1 est une valeur prédéterminée correspondant à quelques pour cent de la valeur nominale du courant en question, K2 est une valeur prédéterminée de quelques pour cent de la valeur maximum de la dérivée du courant à forme d'onde sinusoïdale, K3 est une valeur prédéterminée correspondant à la valeur nominale du courant, et le temps $\tau$ est fixé à une valeur inférieure à la durée d'1/4 période de la fréquence d'alimentation en question.

2. Détecteur pour détecter une saturation dans des transformateurs de courant (1), caractérisé en ce que le détecteur comprend :

- un filtre (2) passe-bas pour éliminer par filtrage les harmoniques présents dans le courant $I(t)$, du côté secondaire du transformateur de courant,
- un premier générateur (3) de valeur absolue pour former $|I(t)|$,
- une unité (6) de différentiation pour former la dérivée $DI(t)$ du courant $I(t)$, laquelle unité (6) de différentiation est connectée à un second générateur 7 de valeur absolue pour former $|DI$

$(t)|$,
- un circuit (9) à mémoire pour produire $I(t-\tau)$, où $\tau$ a une valeur inférieure à la durée de 1/4 de période de la fréquence en question, le circuit (9) à mémoire étant connecté à un troisième générateur (10) de valeur absolue pour former $|I(t - \tau)|$,

en ce que le premier générateur (3) de valeur absolue est connecté à un premier comparateur (4) qui compare son signal d'entrée à une première valeur (K1) prédéterminée, correspondant à quelques pour cent de la valeur nominale du courant, et ce comparateur produisant un signal de sortie si le signal d'entrée est inférieur à la première valeur prédéterminée,

en ce que le second générateur (7) de valeur absolue est connecté à un second comparateur (8) qui compare son signal d'entrée à une seconde valeur (K2) prédéterminée, qui correspond à quelques pour cent de la valeur maximum de la dérivée du courant, et ce comparateur produisant un signal de sortie si le signal d'entrée est inférieur à la seconde valeur (K2) prédéterminée,

en ce que le troisième générateur (10) de valeur absolue est connecté à un troisième comparateur (11) qui compare son signal d'entrée à une troisième valeur (K3) prédéterminée, qui correspond à la valeur nominale du courant, et ce comparateur produisant un signal de sortie si le signal d'entrée est supérieur à la seconde valeur (K3) prédéterminée,

et en ce que les signaux de sortie des trois comparateurs (4,8,11) sont chacun connectés à une entrée d'un élément ET (5), qui est conçu pour fournir un signal (M) de sortie lorsque ses trois entrées reçoivent toutes simultanément un signal de leurs comparateurs associés, ce signal (M) de sortie indiquant une saturation du transformateur de courant.